# EUROPEAN PATENT APPLICATION

(11) **EP 4 711 120 A1**
(43) Date of publication of application: **18.03.2026**
(21) Application number: 23937380.6
(22) Date of filing: 12.05.2023
(51) Int. Cl.: B29C 70/30, B29C 41/02

(54) **METHOD FOR PRODUCING CRYOGENIC TANK**

(71) Applicant: IHI Aerospace Co., Ltd., Gunma 370-2398 (JP)
(72) Inventor: YOSHIDA, Kouki, Tomioka-shi, Gunma 370-2398 (JP); SHIGENARI, Yu, Tomioka-shi, Gunma 370-2398 (JP); SATO, Hiroyuki, Tomioka-shi, Gunma 370-2398 (JP)
(74) Representative: Epping - Hermann - Fischer
(86) International application number: PCT/JP2023/017901
(87) International publication number: WO 2024/236633

(57) **Abstract**

There is provided a method that can solve various problems in a manufacturing method of the conventional art as a method for manufacturing a cryogenic tank that is for storing a cryogenic fluid and has a structure in which an outer shell made of a fiber-reinforced composite material, a release member made of a resin, and a liner made of a resin are disposed in that order from the outside.

In the method for manufacturing a cryogenic tank, the liner is manufactured by a process including
A) a step of preparing a liner resin film composed of the resin that forms the liner,
B) a step of executing slit processing for the liner resin film to fabricate a liner resin tape, and
C) a step of winding the liner resin tape around an outer surface of a mandrel having an outer surface shape corresponding with an inner surface shape of the liner in a state in which tension is applied to the liner resin tape while rotating the mandrel around the axial center thereof.

## Description

### Technical Field

The present disclosure relates to a method for manufacturing a cryogenic tank for storing a cryogenic fluid.

### Background Art

In the aerospace field, a cryogenic tank for storing a cryogenic fluid is often used. For example, in a rocket equipped with an engine that uses liquid hydrogen as a fuel, tanks for storing each of this liquid hydrogen and liquid oxygen as an oxidizer are mounted. Further, development of a hydrogen-fueled aircraft, which does not emit carbon dioxide, is being advanced as part of global warming countermeasures. Also in this field, a tank for storing liquid hydrogen is required.

The cryogenic tank for aerospace applications like the above-described one is strongly demanded to have a light weight in addition to having the basic function of storing a cryogenic fluid. To meet this demand, a tank for which a fiber-reinforced composite material is employed as a material instead of a conventional metal has been proposed (for example, refer to Patent Document 1).

Such a tank made of the fiber-reinforced composite material has a structure in which a liner made of a metal or a resin is bonded to the inner surface of an outer shell made of the fiber-reinforced composite material. In this structure, the outer shell made of the fiber-reinforced composite material functions as a structural member, and the liner made of the metal or the resin functions as a liquid-tight member for preventing leakage of a cryogenic fluid stored inside. It is desirable that the liner also have a light weight, and it is strongly demanded to apply the liner made of the resin with a lower specific gravity than the metal.

However, in the tank with such a structure, the coefficient of linear expansion of the fiber-reinforced composite material forming the outer shell is significantly smaller than that of the resin forming the liner. Thus, when a cryogenic state is made due to filling the inside of the tank with a cryogenic fluid, shrinkage of the liner with the relatively large coefficient of linear expansion is limited by the outer shell with relatively small shrinkage. As a result, there is a possibility that a tensile stress acts on the liner and the liner breaks to separate from the inner surface of the outer shell.

As a measure for solving such a problem, it is conceivable that, instead of bonding the outer shell made of the fiber-reinforced composite material to the liner made of the resin, a film-shaped or tape-shaped release member made of a resin is disposed between them, specifically, on the inner surface of the former or the outer surface of the latter.

In the tank having the structure in which the outer shell made of the fiber-reinforced composite material, the release member made of the resin, and the liner made of the resin are disposed in order from the outside in this manner, when a cryogenic state is made due to filling the inside with a cryogenic fluid, the outer shell and the liner shrink with respective coefficients of linear expansion of each component in a state in which they are isolated from each other due to action of the release member. Thus, the liner is free from risk of breakage, and can fully show the function as the liquid-tight member that prevents leakage of the cryogenic fluid stored inside.

### Related Art Document

### Patent Document

Patent Document 1: Japanese Unexamined Patent Application Publication No. 2006-62320

### Summary of the Invention

### Problems to be solved by the Invention

To manufacture the tank having the structure in which the outer shell made of the fiber-reinforced composite material, the release member made of the resin, and the liner made of the resin are disposed in that order from the outside as described above, the following procedure is employed. First, the liner made of the resin on the innermost side is manufactured. Next, the release member is disposed on the outer surface of the liner. At last, the outer shell made of the fiber-reinforced composite material is formed on the outer surface of the release member.

Among these components, the liner made of the resin is manufactured as follows. A plurality of parts forming the respective portions of the liner are fabricated by shaping through chipping from a resin block by mechanical processing or compression molding using molds under heating. Then, these parts are bonded by a method such as heat fusion (welding), friction stir welding, or adhesive bonding.

However, such a method involves the following problems.
·In both cases of the mechanical processing and the compression molding, there is a limit on reduction in the wall thickness of the fabricated parts, and a large contribution to reduction in the weight of the tank is impossible.
·In the case of shaping the parts through chipping from a resin block by the mechanical processing, a large amount of resin is required to be removed by the chipping, and the removed resin is discarded. Thus, the processing cost and the material cost are high.
·In the case of the compression molding, a plurality of molds are required in order to fabricate the parts.
·Material properties are discontinuous at connection portions between the parts.

Meanwhile, the release member is disposed by manually applying the film-shaped or tape-shaped release member to the outer surface of the liner.

However, such a method involves the following problems.
·A disposition state of the release member depends on skills of the worker, and the quality is unstable.
·In the case of using the tape-shaped release member, an influence of an adhesive applied to the tape is required to be considered.
·In the case of using the film-shaped release member, the occurrence of wrinkles in the application is inevitable, and it is very difficult to completely remove them.

As described above, various problems exist in the method for manufacturing the tank made of the fiber-reinforced composite material including the process of manufacturing the liner made of the resin by bonding the parts fabricated by the shaping through chipping from a resin block or the compression molding using molds and the process of manually applying the film-shaped or tape-shaped release member to the outer surface of this liner.

The present disclosure intends to provide a method for manufacturing a cryogenic tank that can solve the above-described various problems in the conventional art.

### Means for solving the Problems

In order to solve the above-described problem, a method for manufacturing a cryogenic tank according to the present disclosure is a method used for manufacturing of a cryogenic tank that is for storing a cryogenic fluid and has a structure in which an outer shell made of a fiber-reinforced composite material, a release member made of a resin, and a liner made of a resin are disposed in that order from the outside. The liner is manufactured by a process including
A) a step of preparing a liner resin film composed of the resin that forms the liner,
B) a step of executing slit processing for the liner resin film to fabricate a liner resin tape, and
C) a step of winding the liner resin tape around an outer surface of a mandrel having an outer surface shape corresponding with an inner surface shape of the liner in a state in which tension is applied to the liner resin tape while rotating the mandrel around the axial center of the mandrel.

### Advantageous Effects of the Invention

According to the present disclosure, the following excellent effects can be obtained.

Concerning the manufacturing process for the resin liner:
·The thickness of the resin liner can be reduced to a thickness corresponding to a resin film, and thus a large contribution to reduction in the weight of the tank can be made.
·Differently from the conventional art, the mechanical processing is not required, and a material to be discarded also does not occur. Thus, the processing cost and the material cost can be suppressed to low cost.
·Differently from the conventional art, connection portions between parts do not exist, and thus material properties are continuous across the whole of the tank.
·A plurality of molds are not required to be prepared for molding.

Concerning a disposing process for a release member:
·The release member is disposed on the outer surface of the resin liner by a machine, and thus the quality can be stabilized.
·There is no risk of mixing of a foreign matter such as an adhesive.
·The possibility of the occurrence of wrinkles in the release member is low.

### Brief Description of the Drawings

FIG. 1 is a schematic explanatory diagram illustrating a structure of a cryogenic tank manufactured by a manufacturing method of an embodiment of the present disclosure.
FIG. 2 is a schematic explanatory diagram illustrating a manufacturing process for a resin liner in the method for manufacturing a cryogenic tank of the embodiment of the present disclosure.
FIG. 3 is a schematic explanatory diagram illustrating a disposing process for a release member in the method for manufacturing a cryogenic tank of the embodiment of the present disclosure.
FIG. 4 is a flowchart illustrating the whole process in the method for manufacturing a cryogenic tank of the embodiment of the present disclosure.
FIG. 5 is a flowchart illustrating the whole process in an alternative method for manufacturing a cryogenic tank of the embodiment of the present disclosure.
FIG. 6 is a flowchart illustrating the whole process in another alternative method for manufacturing a cryogenic tank of the embodiment of the present disclosure.

### Mode for carrying out the Invention

An embodiment of the present disclosure is described in detail below with reference to the drawings.

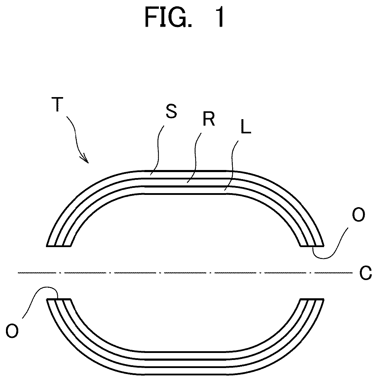

FIG. 1 is a schematic explanatory diagram illustrating a structure of a cryogenic tank T manufactured by a manufacturing method of the embodiment of the present disclosure, and illustrates an end surface when the cryogenic tank T is cut by a plane passing through an axial center C. The cryogenic tank T is a tank for storing a cryogenic fluid. As this cryogenic fluid, for example, liquid hydrogen (temperature: -253°C), liquid nitrogen (temperature: -196°C), liquid oxygen (temperature: -183°C), and LNG (temperature: -162°C) can be given.

The cryogenic tank T is a hollow body of revolution having an opening O at each of both end portions in the direction of the axial center C, and has a structure in which an outer shell S, a release member R, and a liner L are disposed in that order from the outside. The shape of the inner surface of the outer shell S is substantially the same as the shape of the outer surface of the release member R. The shape of the inner surface of the release member R is substantially the same as the shape of the outer surface of the liner L. Further, the openings O are provided in order to attach a tank cap, pipe, or the like. Although the openings O with an equal diameter are provided at both end portions in the illustrated example, they may be openings with diameters different from each other, or the opening O may be provided only at one end portion.

The outer shell S is a component that functions as a structural member of the cryogenic tank T, and is composed of a fiber-reinforced composite material. As such a fiber-reinforced composite material, for example, carbon fiber-reinforced plastic (CFRP), glass fiber-reinforced plastic, and fiber-reinforced plastic (FRP) such as aramid fiber-reinforced plastic can be given. As a matrix resin of this fiber-reinforced composite material, a resin with a forming temperature lower than the melting start temperature of a resin (described later) forming the liner L or the same resin as the resin forming the liner L is used.

The liner L is a component that functions as a liquid-tight member for preventing leakage of a cryogenic fluid stored inside the cryogenic tank T, and is composed of a thermoplastic resin. As this resin, a resin having corrosion resistance and liquid tightness against the cryogenic fluid stored in the tank T in a temperature range from ordinary temperature to cryogenic temperature is used. As such a resin, for example, polycarbonate (PC), polyetheretherketone (PEEK), and a liquid crystal polymer (LCP) can be given.

The release member R is a component bonded to either the inner surface of the outer shell S or the outer surface of the liner L in order to prevent adhesion between the outer shell S and the liner L, and is composed of a thermoplastic resin. As this resin, a resin having a higher melting start temperature than both the matrix resin of the fiber-reinforced composite material forming the above-described outer shell S and the resin forming the liner L is used. As such a resin, for example, Teflon (registered trademark), polyimide, and polyetheretherketone (PEEK) can be given depending on the combination with the thermoplastic resin used for the liner L.

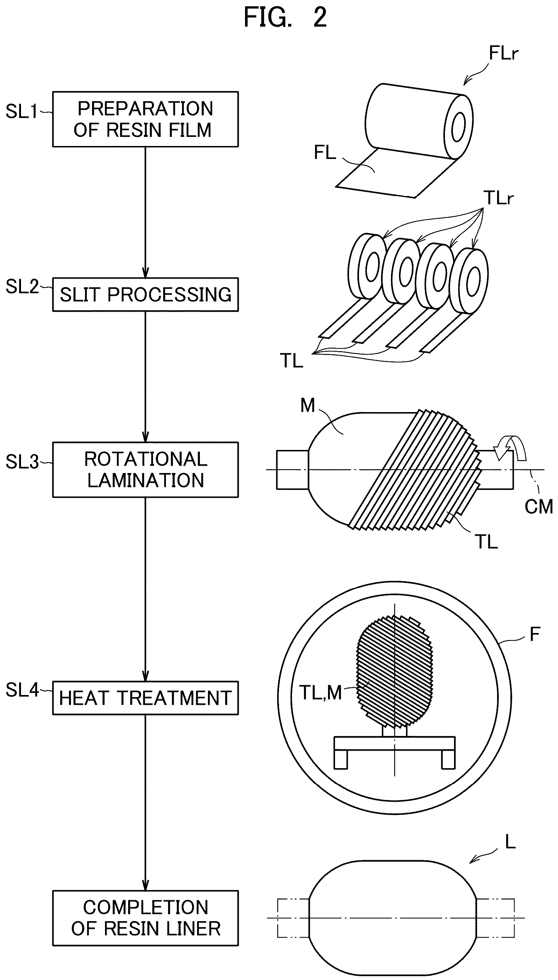

FIG. 2 is a schematic explanatory diagram illustrating a manufacturing process for the resin liner L in the method for manufacturing a cryogenic tank of the embodiment of the present disclosure.

The manufacturing process for the resin liner L is composed of four steps SL1 to SL4.

In the step SL1 (resin film preparation step), a roll FLr obtained by rolling up a resin film (liner resin film) FL is prepared. The resin film FL is a material that is to finally form the liner L through each step to be described below, and is composed of the above-described resin.

Next, in the step SL2 (slit processing step), the roll FLr of the resin film FL is set in a slitter (illustration omitted), and slit processing is executed. As a result, the resin film FL unwound from the roll FLr is cut by a plurality of cutters arranged in the direction perpendicular to the unwinding direction, and becomes a plurality of resin tapes (liner resin tapes) TL each having a predetermined width. Then, the resin tapes TL are each rolled up into a roll TLr. The width of the resin tape TL can be set as appropriate depending on the shape, dimensions, and the like of the resin liner L to be manufactured, and can be set to, for example, 6 mm.

Subsequently, in the step SL3 (rotational lamination step), a mandrel M having an outer surface shape corresponding with the inner surface shape of the resin liner L to be manufactured is prepared. Then, while the mandrel M is rotated around its axial center CM, the resin tape TL is unwound from the roll TLr prepared in the step SL2, and is wound around the outer surface of the mandrel M in a state in which tension is applied to the resin tape TL.

This step is a step substantially similar to filament winding (FW) forming in which a bundle of fiber (prepreg) impregnated with a resin is wound around the outer surface of a mandrel. This FW forming is a method well known as a forming method for a fiber-reinforced composite material, and the above-described step SL3 (rotational lamination step) can be executed by applying knowledge relating to a winding pattern (examples: helical, hoop, and the like) and the like used in the FW forming.

The resin liner L is the component that should function as a liquid-tight member for preventing leakage of a cryogenic fluid stored inside. Thus, in winding the resin tape TL around the outer surface of the mandrel M, the resin tape TL is required to be wound such that at least parts of the width thereof overlap with each other. It is desirable that the overlapping between the resin tapes TL wound adjacent be set to 1/2 of the width of the resin tape TL. Moreover, in order to obtain a required thickness of the resin liner L, the resin tape TL may be further wound on a layer of the resin tape TL that has been already wound, as required.

After the step SL3 (rotational lamination step) is completed, in the step SL4 (heat treatment step), the mandrel M in the state in which the resin tape TL is wound around the outer surface is put in a heat treatment furnace (autoclave) F, and heat treatment for the resin is executed under predetermined pressure and temperature. The pressure is set to an appropriate pressure higher than the atmospheric pressure. The temperature is set to an appropriate temperature equal to or higher than the melting start temperature of the resin. Through the execution of the heat treatment, the resin tape TL wound around the outer surface of the mandrel M becomes monolithic by fusion bonding, and the resin liner L is completed.

After the resin liner L is completed through the process composed of the four steps SL1 to SL4 described above, next, the release member R is disposed on the outer surface of this resin liner L. This is described below.

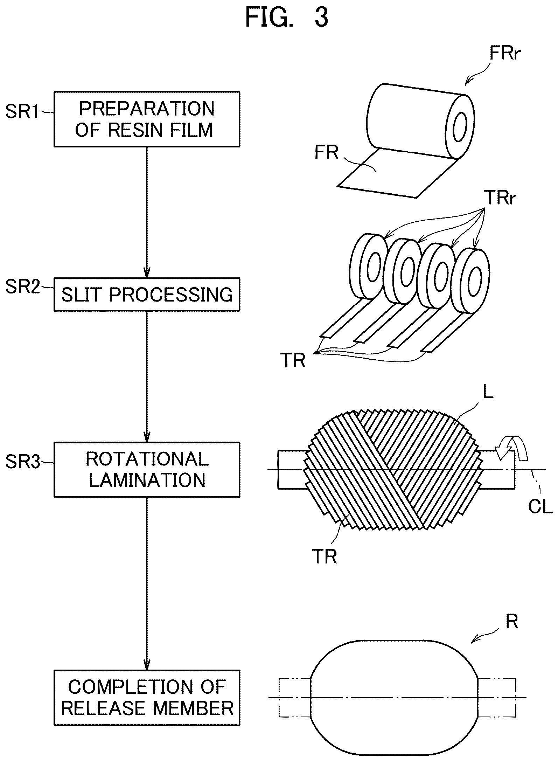

FIG. 3 is a schematic explanatory diagram illustrating a disposing process for the release member R in the method for manufacturing a cryogenic tank of the embodiment of the present disclosure.

In a step SR1 (resin film preparation step), a roll FRr obtained by rolling up a resin film (release member resin film) FR is prepared. The resin film FR is a material that is to finally form the release member R through each step to be described below, and is composed of the above-described resin.

Next, in a step SR2 (slit processing step), the roll FRr of the resin film FR is set in a slitter (illustration omitted), and slit processing is executed. As a result, the resin film FR unwound from the roll FRr is cut by a plurality of cutters arranged in the direction perpendicular to the unwinding direction, and becomes a plurality of resin tapes (release member resin tapes) TR each having a predetermined width. Then, the resin tapes TR are each rolled up into a roll TRr. The width of the resin tape TR can be set as appropriate depending on the shape, dimensions, and the like of the resin liner L completed through the process described with FIG. 2.

Subsequently, in a step SR3 (rotational lamination step), while the resin liner L completed through the process described with FIG. 2 is rotated around its axial center CL, the resin tape TR is unwound from the roll TRr prepared in the step SR2, and is wound around the outer surface of the resin liner L in a state in which tension is applied to the resin tape TR. This completes the release member R.

Similarly to the step SL3 (rotational lamination step) in the manufacturing process for the resin liner L, this step is also a step substantially similar to the FW forming, and can be executed by applying knowledge used in the FW forming. In order to obtain a required thickness of the release member R, the resin tape TR may be further wound on a layer of the resin tape TR that has been already wound, as required.

The manufacturing process for the resin liner L described with reference to FIG. 2 is a process designed on the basis of an assumption that the resin liner L is completed alone. However, in manufacturing the cryogenic tank having the structure in which the outer shell made of the fiber-reinforced composite material, the release member made of the resin, and the liner made of the resin are disposed in that order from the outside, it is efficient to execute the disposing process for the release member R subsequently to the manufacturing process for the resin liner L and further execute a forming process for the outer shell subsequently to the disposing process.

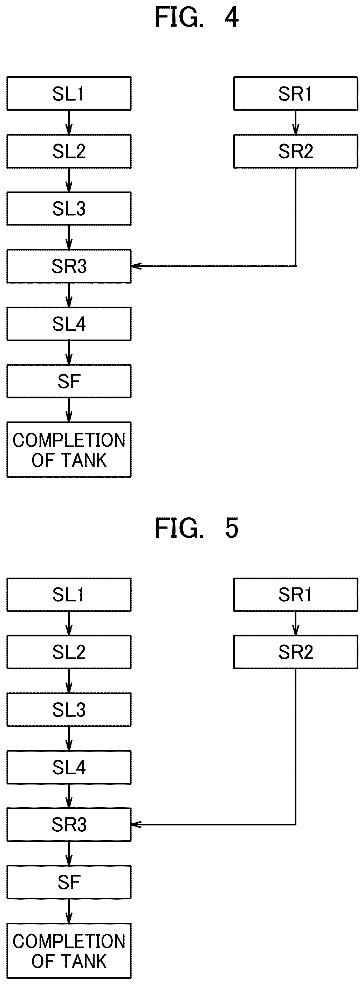

The whole process of such a method for manufacturing a cryogenic tank is illustrated in FIG. 4.

In FIG. 4, SF denotes a step of forming the outer shell S made of the fiber-reinforced composite material on the outer surface of the release member R. This step can be executed by using any publicly-known method as a method for forming a fiber-reinforced composite material.

In the manufacturing method illustrated in FIG. 4, after the step SL3 (rotational lamination step) in the manufacturing process for the resin liner L is completed, subsequently the step SR3 (rotational lamination step) in the disposing process for the release member R is executed. Thereafter, the step SL4 (heat treatment step) is executed.

It is efficient to concurrently execute the step SL1 (resin film preparation step) and the step SL2 (slit processing step) in the manufacturing process for the resin liner L and the step SR1 (resin film preparation step) and the step SR2 (slit processing step) in the disposing process for the release member R prior to the step SL3 (rotational lamination step) and the step SR3 (rotational lamination step), respectively, as illustrated in the diagram.

The reason why the step SR3 (rotational lamination step) in the disposing process for the release member R is executed subsequently to the step SL3 (rotational lamination step) in the manufacturing process for the resin liner L without executing the step SL4 (heat treatment step) as described above is as follows.

In the step SL4 (heat treatment step) in the manufacturing process for the resin liner L, the mandrel M in the state in which the resin tape TL is wound around the outer surface is put in the autoclave F in a state in which the mandrel M is wrapped in a material such as a breather cloth or a bagging film. Then, bagging (vacuuming) is executed for execution of heat treatment. This is a measure for letting out air that has entered the layer of the resin tape TL (and the gap between this layer and the mandrel M). However, there is a possibility that wrinkles generated in the inner surface of the above-described material are transferred to the outer surface of the resin tape TL in direct contact with the material.

In contrast, when the step SR3 (rotational lamination step) in the disposing process for the release member R is executed subsequently to the step SL3 (rotational lamination step) in the manufacturing process for the resin liner L, a state in which the outer surface of the resin tape TL is covered by a layer of the resin tape TR is made. When the step SL4 (heat treatment step) is executed in this state, the layer of the resin tape TR serves as part of a material for bagging, and bagging is enabled with a configuration in which wrinkles do not occur or are less likely to occur. This enables manufacture of the resin liner L having a smooth outer surface.

When there is no risk of transfer of wrinkles from the inner surface of the material for bagging to the outer surface of the resin tape TL, as illustrated in FIG. 5, the step SL4 (heat treatment step) may be executed subsequently to the step SL3 (rotational lamination step) in the manufacturing process for the resin liner L, and thereafter the step SR3 (rotational lamination step) in the disposing process for the release member R and the subsequent step may be executed.

Also in this case, it is efficient to execute the step SR1 (resin film preparation step) and the step SR2 (slit processing step) in the disposing process for the release member R concurrently with the step SL1 (resin film preparation step) and the step SL2 (slit processing step) in the manufacturing process for the resin liner L.

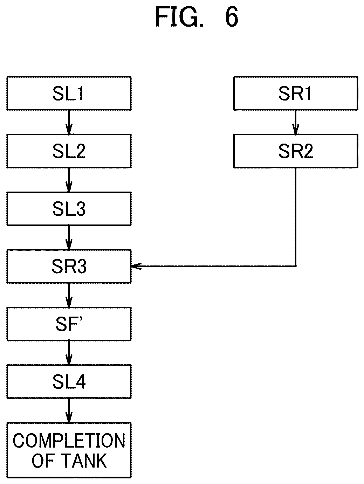

Further, when the matrix resin of the fiber-reinforced composite material forming the outer shell S is the same as the resin forming the liner L, a process illustrated in FIG. 6 may be employed. Specifically, in this process, the step SR3 (rotational lamination step) in the disposing step for the release member R is executed subsequently to the step SL3 (rotational lamination step) in the manufacturing process for the resin liner L. Thereafter, subsequently in a step SF' (outer shell lamination step), the fiber-reinforced composite material forming the outer shell S is laminated outside the layer of the resin tape TR by any publicly-known method. Then, the step SL4 (heat treatment step) is executed. This prevents transfer of wrinkles to the outer surface of the resin tape TL attributed to wrinkles in the material for bagging, and can manufacture the resin liner L having a smooth outer surface. Moreover, the number of times of the heat treatment step is suppressed to the minimum. As the publicly-known method applied in the step SF' (outer shell lamination step), for example, a filament winding (FW) method, an automated fiber placement (AFP) method, and hand lay-up can be given.

Also in this case, it is efficient to execute the step SR1 (resin film preparation step) and the step SR2 (slit processing step) in the disposing process for the release member R concurrently with the step SL1 (resin film preparation step) and the step SL2 (slit processing step) in the manufacturing process for the resin liner L.

According to the method for manufacturing a cryogenic tank of the embodiment of the present disclosure described above, the following technical effects can be obtained concerning the manufacturing process for the resin liner described with reference to FIG. 2.
·The thickness of the resin liner can be reduced to a thickness corresponding to a resin film, and thus a large contribution to reduction in the weight of the tank can be made.
·Differently from the conventional art, the mechanical processing is not required, and a material to be discarded also does not occur. Thus, the processing cost and the material cost can be suppressed to low cost.
·Differently from the conventional art, connection portions between parts do not exist, and thus material properties are continuous across the whole of the tank.
·A plurality of molds are not required to be prepared for molding.

Moreover, the following technical effects can be obtained concerning the disposing process for the release member described with reference to FIG. 3.
·The release member is disposed on the outer surface of the resin liner by the machine, and thus the quality can be stabilized.
·There is no risk of mixing of a foreign matter such as an adhesive.
·The possibility of the occurrence of wrinkles in the release member is low, and an effect of reduction in transfer of the wrinkles to the resin liner exists.

### (Aspects of Present Disclosure)

A method for manufacturing a cryogenic tank according to a first aspect of the present disclosure is a method used for manufacturing of a cryogenic tank that is for storing a cryogenic fluid and has a structure in which an outer shell made of a fiber-reinforced composite material, a release member made of a resin, and a liner made of a resin are disposed in that order from the outside. The liner is manufactured by a process including
A) a step of preparing a liner resin film composed of the resin that forms the liner,
B) a step of executing slit processing for the liner resin film to fabricate a liner resin tape, and
C) a step of winding the liner resin tape around an outer surface of a mandrel having an outer surface shape corresponding with an inner surface shape of the liner in a state in which tension is applied to the liner resin tape while rotating the mandrel around the axial center of the mandrel.

In the method for manufacturing a cryogenic tank according to a second aspect of the present disclosure, the release member is manufactured by a process including
a) a step of preparing a release member resin film composed of the resin that forms the release member,
b) a step of executing slit processing for the release member resin film to fabricate a release member resin tape, and
c) a step of winding the release member resin tape around an outer surface of the liner resin tape in a state in which tension is applied to the release member resin tape while rotating the mandrel in a state in which the liner resin tape is wound around the outer surface of the mandrel around the axial center of the mandrel.

In the method for manufacturing a cryogenic tank according to a third aspect of the present disclosure, the step c) is executed subsequently to the step C), and, subsequently to the step c), a step of putting, in a heat treatment furnace, the mandrel in a state in which the liner resin tape and the release member resin tape are wound around the outer surface of the mandrel and executing heat treatment to cause bonding fusion of the resin of the liner resin tape is executed.

In the method for manufacturing a cryogenic tank according to a fourth aspect of the present disclosure, subsequently to the step C), a step of putting, in a heat treatment furnace, the mandrel in a state in which the liner resin tape is wound around the outer surface of the mandrel and executing heat treatment to cause bonding fusion of the resin of the liner resin tape is executed, and subsequently the step c) is executed.

In the method for manufacturing a cryogenic tank according to a fifth aspect of the present disclosure, the step c) is executed subsequently to the step C), and, subsequently to the step c), the fiber-reinforced composite material is laminated on an outer surface of the release member resin tape, and a step of putting, in a heat treatment furnace, the mandrel in a state in which the liner resin tape, the release member resin tape, and the fiber-reinforced composite material are wound around the outer surface of the mandrel and executing heat treatment to cause bonding fusion of the resin of each of the liner resin tape and the fiber-reinforced composite material is executed.

### Explanation of Reference Signs

- FL: liner resin film
- FR: release member resin film
- L: liner
- M: mandrel
- R: release member
- S: outer shell
- T: cryogenic tank
- TL: liner resin tape
- TR: release member resin tape

## Claims

1. A method for manufacturing a cryogenic tank for storing a cryogenic fluid, the cryogenic tank having a structure in which an outer shell made of a fiber-reinforced composite material, a release member made of a resin, and a liner made of a resin are disposed in that order from outside, wherein
the liner is manufactured by a process including
A) a step of preparing a liner resin film composed of the resin that forms the liner,
B) a step of executing slit processing for the liner resin film to fabricate a liner resin tape, and
C) a step of winding the liner resin tape around an outer surface of a mandrel having an outer surface shape corresponding with an inner surface shape of the liner in a state in which tension is applied to the liner resin tape while rotating the mandrel around an axial center of the mandrel.

2. The method according to claim 1, wherein
the release member is manufactured by a process including
a) a step of preparing a release member resin film composed of the resin that forms the release member,
b) a step of executing slit processing for the release member resin film to fabricate a release member resin tape, and
c) a step of winding the release member resin tape around an outer surface of the liner resin tape in a state in which tension is applied to the release member resin tape while rotating the mandrel in a state in which the liner resin tape is wound around the outer surface of the mandrel around the axial center of the mandrel.

3. The method according to claim 2, wherein
the step c) is executed subsequently to the step C), and
subsequently to the step c),
a step of putting, in a heat treatment furnace, the mandrel in a state in which the liner resin tape and the release member resin tape are wound around the outer surface of the mandrel and executing heat treatment to cause bonding fusion of the resin of the liner resin tape is executed.

4. The method according to claim 2, wherein
subsequently to the step C),
a step of putting, in a heat treatment furnace, the mandrel in a state in which the liner resin tape is wound around the outer surface of the mandrel and executing heat treatment to cause bonding fusion of the resin of the liner resin tape is executed, and
subsequently the step c) is executed.

5. The method according to claim 2, wherein
the step c) is executed subsequently to the step C),
subsequently to the step c), the fiber-reinforced composite material is laminated on an outer surface of the release member resin tape, and
a step of putting, in a heat treatment furnace, the mandrel in a state in which the liner resin tape, the release member resin tape, and the fiber-reinforced composite material are wound around the outer surface of the mandrel and executing heat treatment to cause bonding fusion of the resin of each of the liner resin tape and the fiber-reinforced composite material is executed.
